(19) Europäisches Patentamt
European Patent Office
Office européen des brevets

(11) **EP 2 073 486 A1**

(12) **EUROPEAN PATENT APPLICATION**

(43) Date of publication:
   **24.06.2009   Bulletin 2009/26**

(51) Int Cl.:
   **H04L 29/06** (2006.01)

(21) Application number: **07291542.4**

(22) Date of filing: **17.12.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(71) Applicant: **Alcatel Lucent**
   **75008 Paris (FR)**

(72) Inventors:
   • **Daniellou, Ronan**
     **91460 Marcoussis (FR)**
   • **Verdot, Vincent**
     **75008 Paris (FR)**

(74) Representative: **Louiset, Raphael**
   **Dejade & Biset**
   **35, rue de Châteaudun**
   **75009 Paris (FR)**

(54) **Method for providing multimedia service to a mobile device in case of foreseen network unavailability**

(57)   Method for providing a multimedia service from a media server (1) to a mobile device (2), said method including the following steps:
- the mobile device (2) providing the media server (2) with a predicted path (3) to be followed;
- the mobile device (2) repetitively providing the media server (3) with its current location;
- as long as the current location of the mobile device (2) is in a area (4) of deemed network coverage, the media server (1) providing the mobile device with real time media streams;
- the mobile device (2) playing the media streams real time;
- as soon as the current location of the mobile device (2) approaches an area (5) of deemed network unavailability along the predicted path (3), the media server (1) providing the mobile device (2) with non-real-time media data;
- the mobile device (2) collecting the non-real-time media data in a buffer;
- as long as the current location of the mobile device (2) is in the area (5) of deemed network unavailability, the mobile device (2) playing back the non-real-time media data.

Figure unique

**Description**

FIELD OF THE INVENTION

The invention relates to multimedia services provided by media servers to wireless mobile devices such as 3G mobile phones, communicating PDAs or laptops, etc.

BACKGROUND OF THE INVENTION

Multimedia services such as VoD (*Video on Demand*) or AuD (*Audio on Demand*) are becoming more and more popular among subscribers to wireless mobile networks and it is now a widespread assumption that, since they can provide live broadcast (or unicast), such services may soon replace the ordinary television and radio services.

In multimedia services, audio and video are delivered to the mobile device in a packet format. Standards for interactive multimedia services exist, such as the RTP (*Real-time Transport protocol*), which was developed by the IETF (*Internet Engineering Task Force*) and first published in 1996 under the RFC 1889 standard, made obsolete in 2003 by RFC 3550. RTP provides end-to-end delivery services for data with real-time characteristics. RTSP (Real-time Streaming Protocol), also developed by the IETF and first published in 1998 under the RFC 2326 standard, provides a protocol for use in streaming media systems, allowing a client (such as a mobile device) to remotely control a streaming media server, issuing commands such as "play" and "pause". RTSP mostly relies on RTP as the transport protocol.

A critical issue in multimedia services provided over wireless mobile networks is continuity of service (CoS), which may not be ensured at all places since a discontinuity may arise in the mobile network coverage.

In ordinary multimedia services, any discontinuity in wireless mobile network coverage results in temporary service interruption, whereby the current media stream is frozen. From the user's point of view, the current session is paused until network coverage is back again. In metropolitan areas, such discontinuities seldom arise given the density of network access points (such as WiFi hotspots), whereas in the countryside such discontinuities may often arise, leading to frequent stream interruptions.

Attempts were made to solve this problem. In US patent application No. US 2004/0203670 (King) for example, content channels are stored and retained in cache memory so that their resources are guaranteed to be locally available, regardless of availability of wireless networks.

However in practice the proposed solution is not quite satisfactory, for the resources do not necessarily correspond to the time during which the wireless network is unavailable, thereby leading to possible service loss.

SUMMARY OF THE INVENTION

It is an object of the invention to propose an improved solution to media stream interruptions due to network coverage discontinuities.

It is another object of the invention to propose a method for providing multimedia services providing true continuity of service regardless of availability of wireless networks.

Accordingly, the invention provides, according to a first aspect, Method for providing a multimedia service from a media server to a mobile device, said method including the following steps:

- the mobile device providing the media server with a predicted path to be followed;
- the mobile device repetitively providing the media server with its current location;
- as long as the current location of the mobile device is in a area of deemed network coverage, the media server providing the mobile device with real time media streams;
- the mobile device playing the media streams real time;
- as soon as the current location of the mobile device approaches an area of deemed network unavailability along the predicted path, the media server providing the mobile device with non-real-time media data;
- the mobile device collecting the non-real-time media data in a buffer;
- as long as the current location of the mobile device is in the area of deemed network unavailability, the mobile device playing back the non-real-time media data.

According to a second aspect, the invention provides a computer program product implemented on a computer processing unit for running a media server, said program including code sections for performing the following operations:

- taking into account a predicted path to be followed by a mobile device;
- repetitively taking into account a current location received from said mobile device;
- as long as the current location of the mobile device is in a area of deemed network coverage, providing the mobile device with real time media streams;
- as soon as the current location of the mobile device approaches an area of deemed network unavailability along the predicted path, providing the mobile device with non-real-time media data.

According to a third aspect, the invention provides a computer processing unit implemented with such a computer program product.

BRIEF DESCRIPTION OF THE DRAWINGS

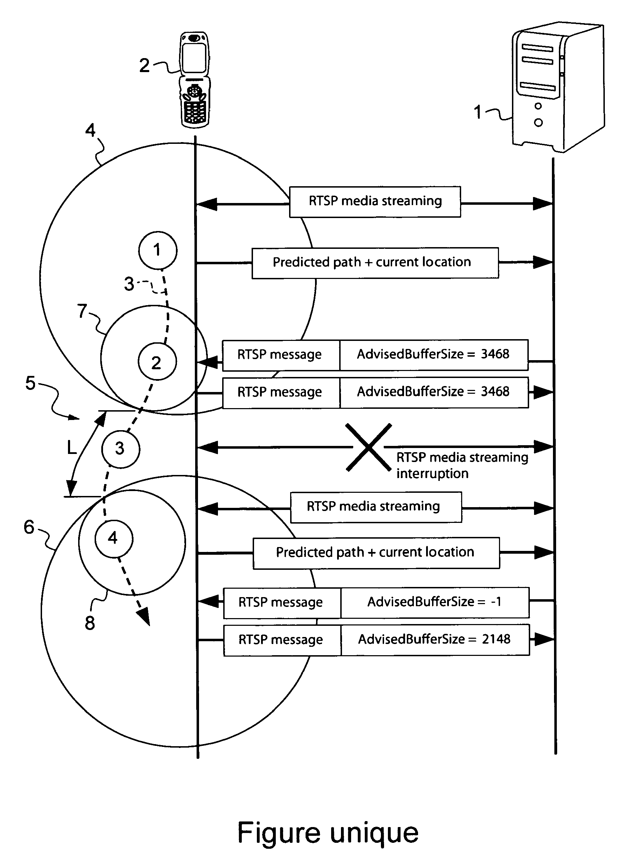

The above and other objects and advantages of the invention will become apparent from the detailed description of preferred embodiments, considered in conjunction with the accompanying drawing, which illustrates provision of a multimedia service from a media server to a mobile device with true continuity of service.

DESCRIPTION OF PREFERRED EMBODIMENTS

Turning now to the drawing, there is shown a media server **1** linked trough a communication network (at least partly wireless) to a mobile device **2** such as a 3G mobile phone, a communicant PDA or laptop, etc., which has subscribed to a multimedia service including e.g. VoD (interactive television) or AoD (interactive radio).

The mobile device **2** is equipped with a navigation system including a localization device such as a GPS (Global Positioning System) chipset which receives localization information (i.e. ground position) on a regular time basis (e.g. each second) from a satellite constellation.

It is assumed that the mobile device **2** is moving along a predicted (planned) path **3** which was memorized within the navigation system (navigation systems ordinarily provide such functionality).

When the mobile device **2** is commanded by a user to display a subscribed multimedia service, it connects to the media server **1** and requests multimedia services to be provided in return.

Where network coverage is available, a media session is established between the media server **1** and the mobile device **2** during which RTP media streams are sent (broadcasted or unicasted) by the server **1** to the mobile device **2.**

The RTP streams are first memorized in cache in the mobile device **2** depending upon the value of the default available cache (or default buffer size), and immediately decoded and displayed with a time shifting with respect of the broadcast - or unicast. As the time shifting is generally of a few seconds, the reading can be considered as "real time", although "quasi real time" may be a more appropriate qualification.

It is to be noted that the localization information is systematically received by the navigation system regardless of the network coverage, since GPS satellite signals can be received wherever on the planet, i.e. without the need of any communication infrastructure.

As soon as the media session is established, the mobile device **2** provides the media server **1** with the predicted path **3** to be followed. Whenever the predicted path **3** is changed for any reason (e.g. the user has unexpectedly decided to change direction or has inputted a new predicted path within the navigation system), the mobile device **2** provides the media **1** server with the refreshed predicted path. In another an alternate embodiment, the mobile device **2** provides the media server **1** with the predicted path **3** on a regular time basis (e.g. every 10 seconds).

The mobile device **2** also repetitively provides the media server **1** with its current location, preferably on a regular time basis (e.g. every 5 seconds). In case the navigation system may be equipped with a speed calculation module, it may calculate the current speed of the mobile device **2** (using the localization information by comparing two successive positions, determining the distance therebetween and dividing this distance by the GPS time basis) and provide the media server **1** with the speed information, e.g. on the same time basis as for the current location of the mobile device **2.**

In an alternate embodiment, speed of the mobile device **2** may correspond to an estimation provided by the navigation system based upon the speed limits along the predicted path.

In another alternate embodiment, speed of the mobile device **2** may be calculated (as disclosed in the preceding paragraph) directly by the media server **1.**

In yet another alternate embodiment, speed of the mobile device **2** may correspond to the minimum (or maximum) of several speeds as calculated/estimated according to the preceding embodiments.

Provision of the predicted path, location and speed information is achieved though the RTSP protocol (in addition to the RTP protocol used for the transportation of the media streams) which authorizes information to be sent by the client (here the mobile device **2)** to the server **1.**

As long as the current location of the mobile device **2** is in an area **4** of deemed network coverage (location ① on the drawing), the media server **1** provides the mobile device **2** with the requested media streams in real time (i.e. in an ordinary fashion according to RFC 3550, wherein the transmission rate is adapted either to the bandwidth requirement of the mobile device **2** in a unicast configuration, or to the weakest bandwidth requirement of a group of mobile devices in a broadcast configuration). The media streams are then played by the mobile device **2** as disclosed hereinbefore.

As soon as the current location of the mobile device **2** approaches an area **5** of deemed network unavailability along the predicted path **3** (position ② on the drawing), the media server **1** calculates an estimated time **T** of network unavailability based upon a length **L** of the uncovered path portion (i.e. the portion of the predicted path located between two areas of network coverage) and the current speed S of the mobile device:

$$L = S \times T$$

Length **L** of the uncovered path portion may be estimated by the media server **1** based e.g. upon the distance between the two closest hotspots belonging to two non contiguous covered areas **4, 6.**

Assumption that the mobile device **2** approaches an uncovered area **5** along the predicted path **3** may be made by the media server **1** e.g. based on the fact that the mobile device **2** is in the emission range **7** of the last hotspot of the current area **4** of network coverage along the predicted path **3.**

The media server **1** then increases the transmission rate in order to provide the mobile device **2** with enough media data to make the reading of the media data last during the journey in the uncovered area **5** of the predicted path **3,** given the estimated time **T** of network unavailability. In other words, the media server **1** provides the mobile device **2** with media streams the size of which does not correspond to the default buffer size. Such media data are considered as non real time for they do not correspond to the default buffer size, in contrast with the real time streams provided in the areas of deemed network coverage in correspondence with the default buffer size.

This is why, before sending the non real time media data, the media server **1** provides the mobile device **2,** in an RTSP message, with a recommended size of the buffer ("AdvisedBufferSize"), adapted to the calculated size of the non-real media data (in the non restrictive illustrated example this size is 3468 kB).

Upon reception of this instruction, the mobile device **2** sets its buffer to the recommended size and acknowledges reception of the instruction from the media server **1.** More precisely, the mobile device **2** informs the media server **1** of its new buffer size, e.g. by sending the media server **1** a response RTSP message ("AdvisedBufferSize") including the new buffer size.

As disclosed hereinbefore, non real time media data are then provided by the media server **1** to the mobile device at a higher rate. The non real time media data are collected by the mobile device **1** in the buffer.

As soon as the mobile device **2** reaches the area **5** of deemed network unavailability, RTP and RTSP sessions (media streaming) are interrupted, and the mobile device **2** initiates playing back the cached non real time media data. Provided that no major change in the speed and/or path is imposed to the mobile device **2,** play back lasts as long as the current location of the mobile device **2** is in the area **5** of deemed network unavailability (position ③ on the drawing).

As soon as the mobile device **2** is back in an area **6** of deemed network coverage (position ④ on the drawing), e.g. the mobile device **2** falls in the emission range **8** of a hotspot, RTP and RTSP sessions are resumed, and the media server **1** sends the mobile device **2** an RTSP message ("AdvisedBufferSize") including a cancellation instruction to set the buffer back to its default size. In the illustrated example, this instruction is provided by a -1 value given to the buffer size.

Upon reception of this instruction, the mobile device **2** sets its buffer back to the default size and acknowledges reception of the instruction from the media server **1.** More precisely, the mobile device **2** informs the media server **1** of its new buffer size, e.g. by sending the media server a response RTSP message ("AdvisedBufferSize") including the new default buffer size (2148 kB in the depicted example).

In case the media server **1** does not have the capability of providing non real time media data in a high quality in due time before hand off of the mobile device **2** to the area **5** of deemed network unavailability, the media server may reduce quality of the data, e.g. using a transcoder to convert the data to a low quality format. As the transmission rate is maintained, the media server **1** is able to provide the mobile device **2** with the required volume of data to be displayed during time **T.**

The disclosed method allows a mobile device to go through an area of network unavailability without apparent media signal interruption. Media reading goes on as if the mobile device were always in an area of network coverage, thereby providing true continuity of service.

This method may be at least partly implemented under the form of a computer program product on a computer processing unit for running the media server **1.**

This program may include code sections for performing the following operations:

- taking into account the predicted path **3** to be followed by the mobile device **2,** as provided by the mobile device **2** during a RTSP session;
- repetitively taking into account the current location received from the mobile device **2;**
- as long as the current location of the mobile device **2** is in a area **4** of deemed network coverage, providing the mobile device **2** with real time media streams;
- as soon as the current location of the mobile device **2** approaches an area **5** of deemed network unavailability along the predicted path **3,** providing the mobile device **2** with non-real-time media data.

**Claims**

1. Method for providing a multimedia service from a media server **(1)** to a mobile device **(2),** said method including the following steps:

   - the mobile device **(2)** providing the media server **(2)** with a predicted path **(3)** to be followed;
   - the mobile device **(2)** repetitively providing the media server **(3)** with its current location;
   - as long as the current location of the mobile device **(2)** is in a area **(4)** of deemed network coverage, the media server **(1)** providing the mobile device with real time media streams;
   - the mobile device **(2)** playing the media streams real time;
   - as soon as the current location of the mobile device **(2)** approaches an area **(5)** of deemed network unavailability along the predicted path **(3),** the media server **(1)** providing the mobile device **(2)** with non-real-time media data;
- the mobile device **(2)** collecting the non-real-time media data in a buffer;
- as long as the current location of the mobile device **(2)** is in the area **(5)** of deemed network unavailability, the mobile device **(2)** playing back the non-real-time media data.

2. Method according to claim 1, further including the following steps:

   - the media server **(1)** calculating an estimated time of network unavailability;
   - the media server **(1)** adapting the size of the non-real time media data to the estimated time of network unavailability;

3. Method according to claim 2, further including the following steps:

   - the media server **(1)** providing the mobile device **(2)** with a recommended buffer size corresponding to the calculated size of the non-real media data before sending the same;
   - the mobile device **(2)** setting its buffer to the recommended size.

4. Method according to claim 3, further including the following step:

   - the mobile device **(2)** informing the media server **(1)** of its set buffer size.

5. Computer program product implemented on a computer processing unit for running a media server **(1),** said program including code sections for performing the following operations:

   - taking into account a predicted path **(3)** to be followed by a mobile device **(2)**;
   - repetitively taking into account a current location received from said mobile device **(2)**;
   - as long as the current location of the mobile device **(2)** is in a area **(4)** of deemed network coverage, providing the mobile device **(2)** with real time media streams;
   - as soon as the current location of the mobile device **(2)** approaches an area **(5)** of deemed network unavailability along the predicted path, providing the mobile device **(2)** with non-real-time media data.

6. Computer processing unit implemented with a computer program product according to claim 5.

Figure unique

**European Patent Office**

**EUROPEAN SEARCH REPORT**

Application Number

EP 07 29 1542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 777 890 A (ALCATEL LUCENT [FR]) 25 April 2007 (2007-04-25) <br> * abstract * <br> * paragraph [0001] - paragraph [0007] * <br> * paragraph [0023] - paragraph [0038] * <br> * figures 1,2,7 * | 1-6 | INV. H04L29/06 |
| X | DE 100 25 725 A1 (WALKE BERNHARD [DE]; HERWONO IAN [DE]) 6 December 2001 (2001-12-06) <br> * abstract * <br> * paragraph [0001] - paragraph [0015] * | 1-6 | |
| A | BELLAVISTA P ET AL: "Mobility prediction for mobile agent-based service continuity in the wireless Internet" MOBILITY AWARE TECHNOLOGIES AND APPLICATIONS. FIRST INTERNATIONAL WORKSHOP, MATA 2004. PROCEEDINGS (LECTURE NOTES IN COMPUTER SCIENCE VOL.3284) SPRINGER-VERLAG BERLIN, GERMANY, 2004, pages 1-12, XP002480628 ISBN: 3-540-23423-3 <br> * abstract * <br> * sections 1., 5., 6. * | 2,3 | TECHNICAL FIELDS SEARCHED (IPC) <br><br> H04L |
| A | ANONYMOUS: "Optimized Delivery of Audio&Video Streaming over Wireless Networks" INTERNET CITATION, [Online] XP002457797 Retrieved from the Internet: URL:http://www1.alcatel-lucent.com/podcast /innovation/pdf/audiovideo_streaming.pdf> [retrieved on 2007-11-06] <br> * the whole document * | 1-4 | |

The present search report has been drawn up for all claims

| Place of search | Date of completion of the search | Examiner |
|---|---|---|
| The Hague | 19 May 2008 | Kesting, Volker |

EPO FORM 1503 03.82 (P04C01)

**ANNEX TO THE EUROPEAN SEARCH REPORT**
**ON EUROPEAN PATENT APPLICATION NO.**

EP 07 29 1542

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2008

| Patent document cited in search report | | Publication date | Patent family member(s) | | Publication date |
|---|---|---|---|---|---|
| EP 1777890 | A | 25-04-2007 | CN<br>US | 1953460 A<br>2007094461 A1 | 25-04-2007<br>26-04-2007 |
| DE 10025725 | A1 | 06-12-2001 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040203670 A